# EUROPEAN PATENT APPLICATION

(11) **EP 4 456 540 A1**
(43) Date of publication of application: **30.10.2024**
(21) Application number: 23746023.3
(22) Date of filing: 13.01.2023
(51) Int. Cl.: H04N 21/431

(54) **VIDEO PLAYBACK CONFIGURATION METHOD AND APPARATUS, ELECTRONIC DEVICE, AND STORAGE MEDIUM**

(30) Priority: 25.01.2022 CN 202210089974
(71) Applicant: BEIJING BYTEDANCE NETWORK TECHNOLOGY CO., LTD., Beijing 100041 (CN)
(72) Inventor: SU, Yitao, Beijing 100086 (CN); GAO, Ruie, Beijing 100086 (CN); DU, Yuzhang, Beijing 100086 (CN)
(74) Representative: Dentons UK and Middle East LLP
(86) International application number: PCT/CN2023/072141
(87) International publication number: WO 2023/143141

(57) **Abstract**

Provided are a video playback configuration method and apparatus, a device, and a medium. The video playback configuration method comprises: when a client end is opened, determining an initialized playback state for video playback according to a video playback state configuration of a current account, and performing video playback; during playback of a current video, in response to a trigger operation of a user on a video playback configuration panel, displaying the video playback configuration panel, and providing a preset video playback state configuration button in the video playback configuration panel; updating the playback state of the current video according to a result of an operation by the user on the preset video playback state configuration button, so as to cause the client end playing the current video to perform video playback according to the updated playback state when switching to playing a different video and before a running process is finished.

## Description

The present application claims the priority of Chinese patent application No. 202210089974.6 filed at Chinese Patent Office on January 25, 2022, the entirety of which is incorporated into the present application by reference.

### TECHNICAL FIELD

The present disclosure relates to the technical field of intelligent terminals, for example, to a method, apparatus, electronic device and storage medium for video playing setting.

### BACKGROUND

In some of the video portals, a user often needs to turn on a caption when watching a video with a noisy background or a video in a non-native language, so as to facilitate the understanding of the video's content.

Usually, on and off of the caption are often made by setting the client, so that the setting of caption on will take effect for the account, and every video played by the client will exhibit the caption after the setting of caption on. During the playing of the video, however, there is no switch available for adjusting the caption displaying status. Therefore, the mode for controlling on/off of the caption is not convenient enough for the user, resulting in a poor video data consumption experience.

### SUMMARY

The present disclosure provides a method, apparatus, electronic device and storage medium for video playing setting, which can provide a video playing status setting panel in the video playing interface to facilitate the user to set the video playing status at any time, while maintaining the user's video playing status settings effective for the duration from the start to end of the video playing application process, during which when playing a different video, it is not necessary to repeat the same setting operations.

In a first aspect, the present disclosure provides a video playing setting method, comprising:
determining, when a client is started, an initialized playing status according to video playing status setting information of a current user account, and performing video playing;
exhibiting, during playing of a current video, a video playing setting panel in response to a user's trigger operation on the video playing setting panel, and providing a preset video playing status setting button in the video playing setting panel; and
updating a video playing status of the current video according to a result of the user's operation on the preset video playing status setting button, to enable the client playing the current video to perform video playing according to the updated video playing status when switching to play a different video before ending a running process.

In a second aspect, the present disclosure provides a video playing setting apparatus, comprising:
a video playing initialization module, configured to determine, when a client is started, an initialized playing status according to video playing status setting information of a current user account, and perform video playing;
a setting panel exhibition module, configured to exhibit, during playing of a current video, a video playing setting panel in response to a user's trigger operation on the video playing setting panel, and provide a preset video playing status setting button in the video playing setting panel; and
a playing setting update module, configured to update a video playing status of the current video according to a result of user's operation on the preset video playing status setting button, to enable the client playing the current video to perform video playing according to the updated video playing status when switching to play a different video before ending a running process.

In a third aspect, the present disclosure provides an electronic device, comprising:

One or more processors;
a storage, configured to store one or more programs,
wherein the one or more programs, when executed by the one or more processors, causes the one or more processors to implement the video playing setting method described above.

In a fourth aspect, the present disclosure provides a storage medium containing computer-executable instructions which, when executed by a computer processor, are used for performing the video playing setting method described above.

In a fifth aspect, the present disclosure provides a computer program product, including a computer program carried on a non-transitory computer readable medium, the computer program including program codes for performing the video playing setting method described above.

### BRIEF DESCRIPTION OF DRAWINGS

Fig. 1 is a flowchart of a video playing setting method provided by Embodiment 1 of the present disclosure;
Fig. 2 is a diagram of a video playing interface provided by Embodiment 1 of the present disclosure;
Fig. 3 is a diagram of a video playing setting panel provided by Embodiment 1 of the present disclosure;
Fig. 4 is a flowchart of a video playing setting method provided by Embodiment 2 of the present disclosure;
Fig. 5 is a diagram of a prompt text of a video playing interface provided by Embodiment 2 of the present disclosure;
Fig. 6 is a diagram of another prompt text of a video playing interface provided by Embodiment 2 of the present disclosure;
Fig. 7 is a diagram of a content display area related to a video playing status provided by Embodiment 2 of the present disclosure;
Fig. 8 is a diagram of a content prompt panel provided by Embodiment 2 of the present disclosure;
Fig. 9 is a flowchart of a video playing setting method provided by Embodiment 3 of the present disclosure;
Fig. 10 is a diagram of a video playing setting panel provided with a caption on/off status setting button provided by Embodiment 3 of the present disclosure;
Fig. 11 is a diagram of a video posting setting interface provided by Embodiment 3 of the present disclosure;
Fig. 12 is a diagram of an automatic caption generation function prompt panel provided by Embodiment 3 of the present disclosure;
Fig. 13 is a structural diagram of a video playing setting apparatus provided by Embodiment 4 of the present disclosure; and
Fig. 14 is a structural diagram of an electronic device provided by Embodiment 5 of the present disclosure.

### DETAILED DESCRIPTION

The embodiments of the present disclosure will be described below with reference to the accompanying drawings. Although certain embodiments of the present disclosure are shown in the drawings, the present disclosure can be implemented in various forms, these embodiments are provided for understanding of the present disclosure. The drawings and embodiments of the present disclosure are only used for illustrative purposes.

The various steps described in the implementations of the methods of the present disclosure may be performed in a different order and/or in parallel. Furthermore, the implementations of the methods may include additional steps and/or omit the execution of the illustrated steps. The scope of the present disclosure is not limited in this respect.

As used herein, the term "including" and its variants are open-ended including, that is, "including but not limited to". The term "based on" is "at least partially based on". The term "one embodiment" means "at least one embodiment"; the term "another embodiment" means "at least one other embodiment"; and the term "some embodiments" means "at least some embodiments". The related definitions of other terms will be presented in the following description.

The concepts of "first" and "second" mentioned in the present disclosure are only used to distinguish among different apparatuses, modules or units, and are not used to limit the order or interdependence of the functions performed by such apparatuses, modules or units.

The modifications of "a" and "a plurality of" mentioned in the present disclosure are schematic rather than limiting, and it should be understood by those skilled in the art that such modifications should be understood as "one or more", unless clearly indicated otherwise in the context.

### Embodiment 1

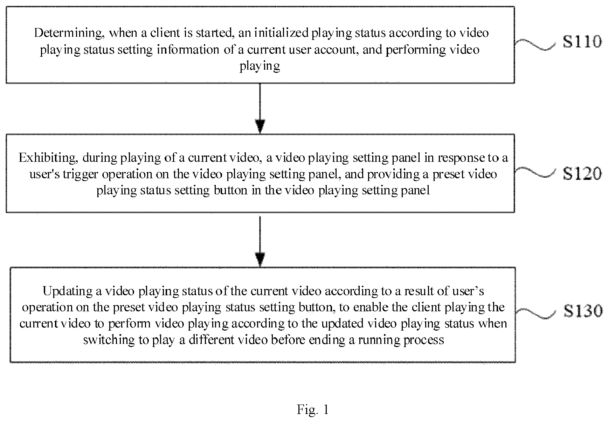

Fig. 1 is a flowchart of a video playing setting method provided by Embodiment 1 of the present disclosure, which is applicable to scenarios of video playing status setting, e.g., to short video playing platforms. The method can be performed by a video playing setting apparatus, which can be implemented in the form of software and/or hardware, and can be configured in an electronic device, such as a mobile terminal or a server device.

As shown in Fig. 1, the video playing setting method provided by this embodiment includes:
S 110: Determining, when a client is started, an initialized playing status of video playing according to video playing status setting information of a current user account, and performing video playing.

Generally, in a client of a short video application or other social media application that enables posting and watching videos, when the client is started and in use, the preset video playing status setting parameter information in the client corresponding to the current user account will be used as the initialized playing status of video playing for video playing. The initialized playing status of video playing can be set through various setting items in the system settings of the client, and the result of the setting will be saved in the user's account. For example, the user can set, through the system, the caption of the video, the video content's keywords to be exhibited in the video playing interface, playing status parameters such as a ratio of areas of the video exhibition interface to terminal interface (such as displaying in full screen or displaying in partial screen area). The user can set corresponding video playing status parameters according to their preferences for watching videos.

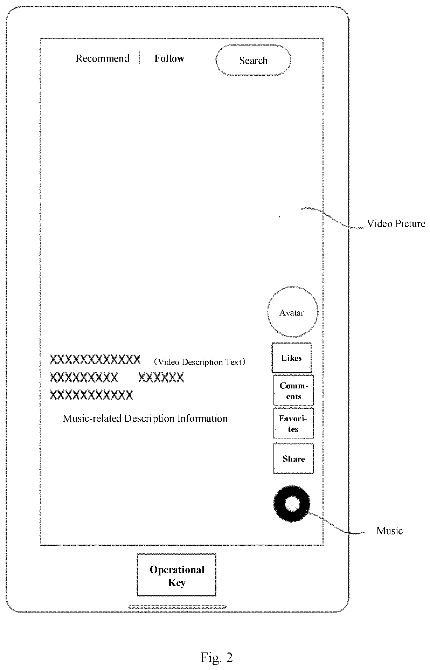

Exemplarily, when a user starts a short video application, a video playing status will be determined according to video playing status setting information corresponding to the user's account, and a recommended video stream will be played. If the user does not modify the video playing status during watching the video, the playing of the video will always be performed according to an initial video playing status. A video playing interface will also exhibit contents related to the current video and some buttons that the user may operate. Referring to the video playing interface shown in Fig. 2, the contents related to the current video exhibited in this interface include contents such as video description text and music related description information of the video. The video description text may be the video name, title or keywords, etc. The operable buttons in the video playing interface include operations such as Likes, Comments, Favorites, and Shares. The user may also click on the Avatar to turn the interface to the homepage of the creator of the current video, or click on the music album logo at the lower right of the current video playing interface to determine the music information of the current video and acquire more videos utilizing the current music. In addition, in the current video playing interface, the user can also switch the playing strategy of video streaming data, play the video data posted by the followed users followed by the current user, or play a video recommended for the user according to a preset video recommendation strategy.

S 120: Exhibiting, during playing of current video, a video playing setting panel in response to the user's trigger operation on the video playing setting panel, and providing a preset video playing status setting button in the video playing setting panel.

In order for the user to set video playing parameters or status more conveniently, a hidden video playing setting panel is further set in the current video playing interface. When it is necessary to change the settings of the video playing parameters or video playing status, the user may call up the video playing setting panel according to a preset panel triggering mode. The panel triggering mode may be, long-pressing at any position in the current video playing interface, performing a gesture that can trigger the panel, or setting an operational button to enter the video playing setting panel in the video playing interface.

After the user triggers the video playing setting panel according to an established mode, the current video playing interface can exhibit a corresponding video playing setting panel, on which a corresponding preset video playing status setting button is set. The preset video playing status setting button provided in the video playing setting panel may be determined according to the initialized playing status of video playing. When any playing status setting item in the initialized playing status is in on status, the preset video playing status setting button provided in the video playing setting panel is a corresponding playing status setting item off button; and when any playing status setting item in the initialized playing status is in off status, the preset video playing status setting button provided in the video playing setting panel is a corresponding playing status setting item on button.

The video playing status may include settable status items of the current video playing such as a caption on/off status, a video content or title translation on/off status, a video multiple-speed playing status, and whether video is muted, etc. Correspondingly, the preset video playing status setting button may be one or more of the video caption on/off status setting button, the video content or title translation on/off status setting button, video multiple-speed playing status setting button or a video sound on/off status setting button.

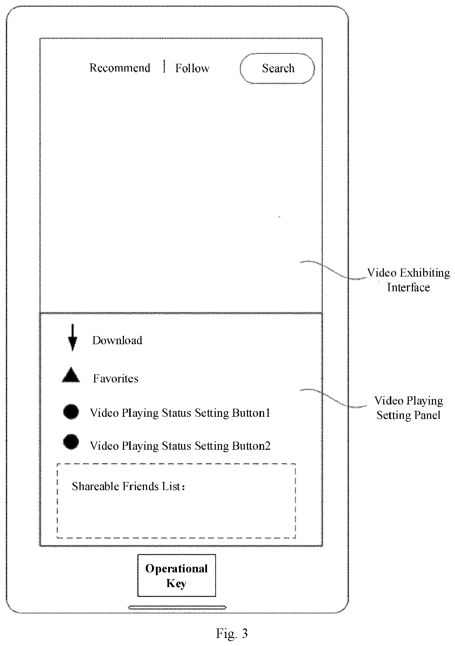

Exemplarily, the user performs a long-pressing operation at any position in the current video playing interface, so as to trigger the video playing setting panel. As a result, the video playing setting panel pops up from the video playing interface, as shown in Fig. 3. In Fig. 3, the video playing setting panel includes functional buttons such as Download and Favorites, and also include Video Playing Status Setting Button 1 and Video Playing Status Setting Button 2, as well as Video Shareable Friends List. Accordingly, the user may interact with any item of content in the video playing setting panel to realize corresponding setting of functions.

S 130: Updating a video playing status of the current video and video playing status settings according to a result of user's operations on the preset video playing status setting button, to enable the client playing the current video to perform video playing according to the updated video playing status settings when switching to play a different video before ending a running process.

After the user performs a triggering operation on any of the functional buttons or status setting buttons in the video playing setting panel, a corresponding function will be realized or a corresponding setting will be done. For example, after the user triggers any of the video playing status setting buttons, the playing status of the video will be changed. For example, during the previous video playing in which the video was being played at a double speed, the video playing status setting button 1 functions as a button for turning off the video multiple-speed playing status, and then, after this button is triggered, the video playing will be performed at a normal video playing speed (i.e., at a 1x speed). For another example, during the current video playing in which the caption of the video would be displayed, the video playing status setting button 2 functions as a button for turning off the video caption displaying status, and then, after this button is triggered, no caption will be displayed during the video playing.

After the user triggers the video playing status setting button, the corresponding video playing status will be updated, and the client playing the current video will be maintained before ending the running process (when the user has not changed the playing status again). That is, when the next video stream is switched to be played after the current video has been played, the video will still be played in the updated video playing status. For example, after the current video is switched from being played at a 2x speed to being played at a 1x speed, the next video to the current video will still be played at a 1x speed instead of the previous 2x speed. For another example, after the current video no longer displays the caption, the video's caption will not be displayed when the next video is being played. Therefore, when the user watches multiple videos continuously, it is not necessary to repeat the same video playing status setting. When the user wants to change the video playing status again, the user just needs to trigger the video playing setting panel again.

If the process of the application client playing the video is terminated, the video playing status changed by triggering the preset video playing status setting button will not be remembered, and the video playing client will, after being restarted, perform the playing according to an initial status set by the user of video playing in the client system or a default initial status. By triggering the video playing setting panel during watching the video, the user doesn't need to enter a system setting interface every time to set video playing status parameters, achieving a more convenient and friendly operation process. There are equivalently two kinds of video playing status setting mechanisms, that is, one is a video playing status setting mechanism set and determined by the user in the client system, which takes effect every time the client starts; and the other one is a video playing status setting mechanism set through the video playing setting panel, which takes effect only for a duration from a start to end of the running process of the client.

The technical schemes of the embodiments of the present disclosure can take the system setting items of the user's video playing status as an initialized playing status when the client is started, and set in the video playing interface a video playing setting panel which can be triggered to pop-up, and exhibit, during the playing of the current video, the video playing setting panel in response to the user's triggering operation on the video playing setting panel, and provide a preset video playing status setting button in the video playing setting panel; then update, according to a result of the user's operation on the preset video playing status setting button, the video playing status of the current video and video playing status settings, to enable the client playing the current video to perform video playing according to the updated video playing status settings when switching to play a different video before ending the running process. The technical schemes disclosed by the embodiments of the present disclosure solve a problem that the current mode for controlling on/off of the caption is inconvenient for the user and the video consumption experience is poor; and can provide a video playing status setting panel in the video playing interface to facilitate the user to set the video playing status at any time, while maintaining the user's video playing status settings effective for a duration from the start to end of the video playing application process, during which when playing a different video, it is not necessary to repeat the same setting operations, achieving a better video consumption experience.

### Embodiment 2

The schemes of the video playing setting methods provided in the embodiments of the present disclosure can be combined with those provided in the above embodiments. The video playing setting method provided by this embodiment describes the scheme of prompting and guiding the video setting operations during the setting of video playing status.

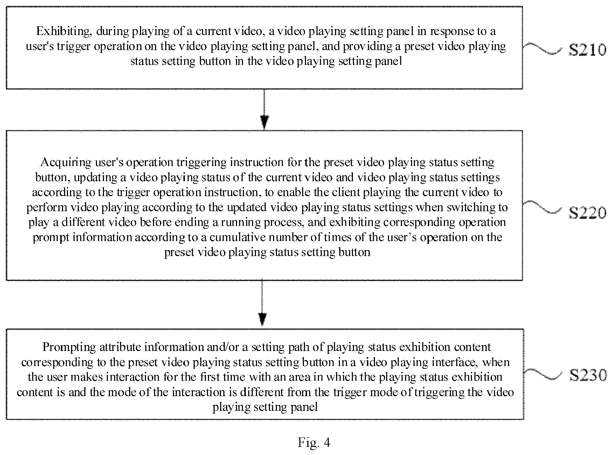

Fig. 4 is a flowchart of a video playing setting method provided by Embodiment 2 of the present disclosure. As shown in Fig. 4, the video playing setting method provided by this embodiment includes:
S210: Exhibiting, during playing of current video, a video playing setting panel in response to user's trigger operation on the video playing setting panel, and providing a preset video playing status setting button in the video playing setting panel.

The playing status of the current video may be an initialized playing status after the client is started, or may be a playing status modified during the playing.

S220: Acquiring user's triggering operation instruction for the preset video playing status setting button, updating a video playing status of the current video and video playing status settings according to the trigger operation instruction, to enable the client playing the current video to perform video playing according to the updated video playing status settings when switching to play a different video before ending the running process, and exhibiting corresponding operation prompt information according to a cumulative number of times of the user's operations on the preset video playing status setting button.

After the user triggers any of the video playing status setting buttons, the playing status of the video will be changed, so that the video playing will be performed according to the current latest changed video playing status when the user plays the video before the process of the video playing client ends.

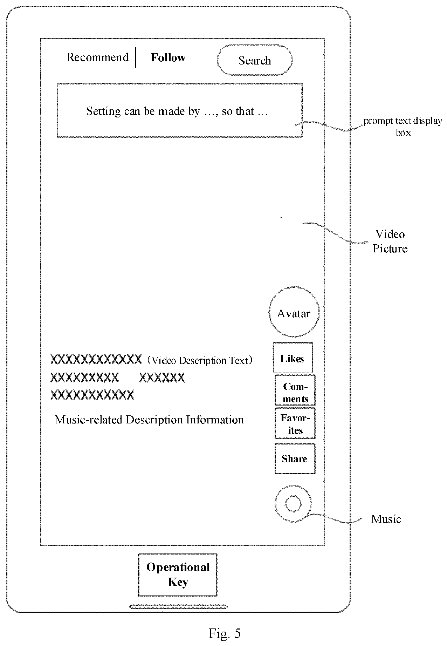

At the same time, in order for a more convenient and friendly process of using the video playing client by the user, related operation information may also be prompted. For example, a cumulative number of times of the user's operations on the preset video playing status setting button indicates to some extent the user's level of familiarity with the client playing the current video. When the cumulative number of times of the user's operations on the preset video playing status setting button is smaller than a preset number of times, it is considered that the user is not so familiar with the mode of setting video playing status, and a corresponding prompt text may be exhibited in the current video playing interface, as shown by the text content "Setting can be made by ..., so that ..." in Fig. 5. The wording mode and content may be to prompt a corresponding playing status setting path and scheme according to the contents of video playing status setting items.

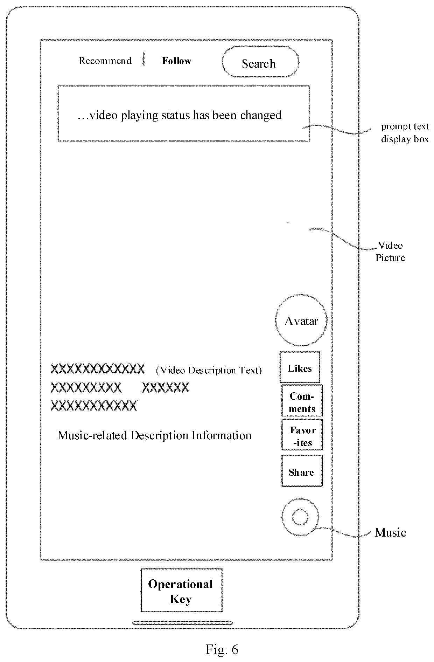

When the cumulative number of times of the user's operations on the preset video playing status setting button is more than the preset number of times, it is considered that the user is already familiar with the mode of setting video playing status, and a corresponding prompt text may be exhibited in the current video playing interface, as shown by the text content "···-video playing status has been changed " in Fig. 6, to inform the user that the user's operation triggering instruction for the preset video playing status setting button has been responded to. The wording mode and content may be to prompt a corresponding playing status setting path and scheme according to the contents of video playing status setting items.

S230: Prompting attribute information and/or a setting path of playing status exhibition content corresponding to the preset video playing status setting button in the video playing interface, when the user makes interaction for the first time with an area in which the playing status exhibition content is and the mode of the interaction is different from the trigger mode of triggering the video playing setting panel.

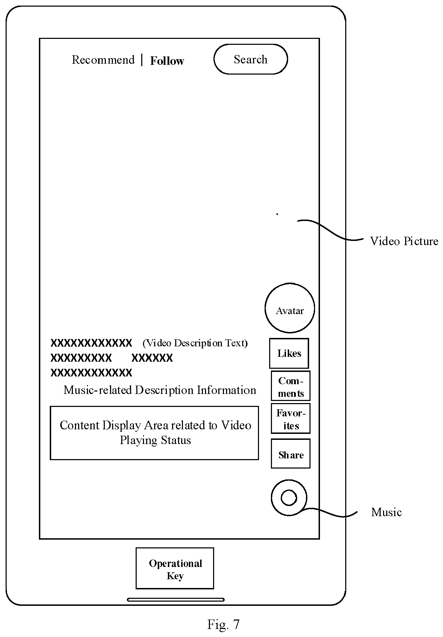

In an implementation, the user may also be prompted with video playing status setting items that can be set. For example, in the video playing interface, there is provided a content display area related to video playing status (as shown in Fig. 7), in which video caption or video-related translation content may be displayed. When the user clicks on any position in the display area or otherwise makes interaction with an area in which the playing status exhibition content is, a corresponding prompt text may be displayed to inform the user of what the content in the area is and the corresponding setting mode.

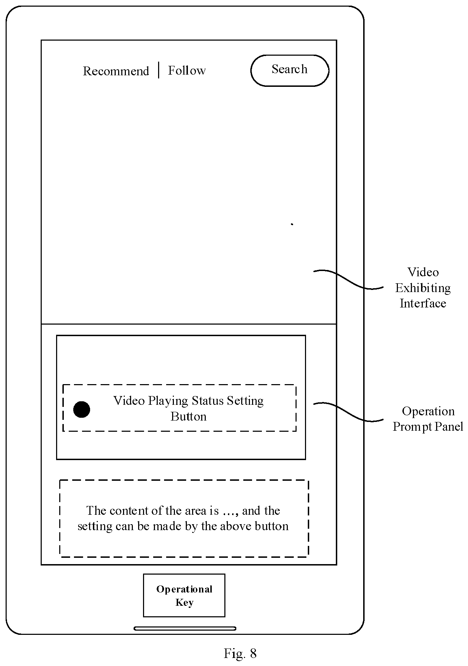

Exemplarily, as shown in Fig. 8, the prompt text may be exhibited by means of an operational prompt panel. If the content display area related to video playing status exhibits a video caption, then the prompt content of the operational prompt panel may be "The content of the area is a video caption, and the setting can be made by the video playing status setting button in the video playing status setting panel, to turn off the video caption". Therefore, the user can understand the mode of setting video playing status, and perform the setting according to the requirements in the subsequent video consumption process.

There is no strict restriction on the execution order among step S230 and steps S210 and S220.

The technical schemes of the embodiments of the present disclosure set in the video playing interface a video playing setting panel which can be triggered to pop-up, and exhibit, during playing of the current video, the video playing setting panel in response to the user's triggering operation on the video playing setting panel, and provide a preset video playing status setting button in the video playing setting panel; then update, according to a result of the user's operation on the preset video playing status setting button, the video playing status of the current video and video playing status settings, to enable the client playing the current video to perform video playing according to the updated video playing status settings when switching to play a different video before ending the running process, while prompting, during the watching of videos by the user, a function of video playing status setting, and exhibiting, during the performing of video playing status setting, a corresponding prompt text for the user, so that the user can have a more intuitive understanding of the mode of the setting, learn the operations of the video playing client faster, and obtain a better experience. The technical schemes disclosed by the embodiments of the present disclosure solve a problem that the current mode for controlling on/off of the caption is inconvenient for the user and the video consumption experience is poor; and can provide a video playing status setting panel in the video playing interface to facilitate the user to set the video playing status at any time, while maintaining the user's video playing status settings effective for the duration from the start to end of the video playing application process, during which when playing a different video, it is not necessary to repeat the same setting operations, achieving a better video consumption experience.

### Embodiment 3

The schemes in the video playing setting methods provided in the embodiments of the present disclosure can be combined with those provided in the above embodiments. The video playing setting method provided by this embodiment further describes the process of video playing setting when the preset video playing status setting button is a video caption on/off status setting button.

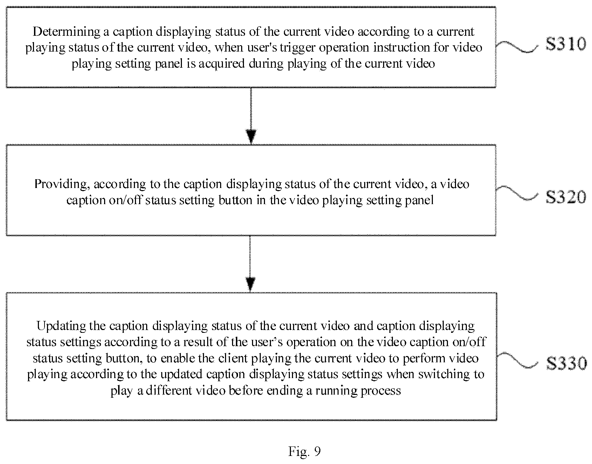

Fig. 9 is a flowchart of a video playing setting method provided by Embodiment 3 of the present disclosure. As shown in Fig. 9, the video playing setting method provided by this embodiment includes:
S310: Determining a current caption displaying status of the current video according to a current playing status of the current video, when user's trigger operation instruction for the video playing setting panel is acquired during playing of the current video.

In one case, the current playing status of the current video is the initialized playing status of video playing when the client is started, which is determined according to playing status setting parameters of the user's account. In another case, the user may change the setting items of the video playing status during watching the video, so the current playing status is the updated video playing status. Whether the video is displayed with a caption may be determined according to the current playing status of the current video. For the case that the user has not performed any setting, if a video has a corresponding caption file, the video may be set by default to be displayed with the caption.

Whether the current video has a matching caption file depends on whether the poster of the video has selected a caption generation function when posting the video. If the user set a caption generation function when posting the video, the client will automatically generate a caption file according to the audio data in the video, and upload it to the server synchronously with the video data, for other users to use when consuming the video data. Accordingly, the video data generated with a caption file will be identified with a corresponding caption identification. Therefore, when the client is playing the video, an identification may be performed according to the identification of the video, to determine whether the video identification information contains the caption identification information, and if it is determined that the video identification information contains the caption identification information, it means that the current video contains a caption file matching therewith.

When the user triggers the video playing setting panel, whether the current video has a corresponding caption file may be confirmed to determine the exhibition content of the video playing setting panel.

S320: Providing, according to the caption displaying status of the current video, a video caption on/off status setting button in the video playing setting panel.

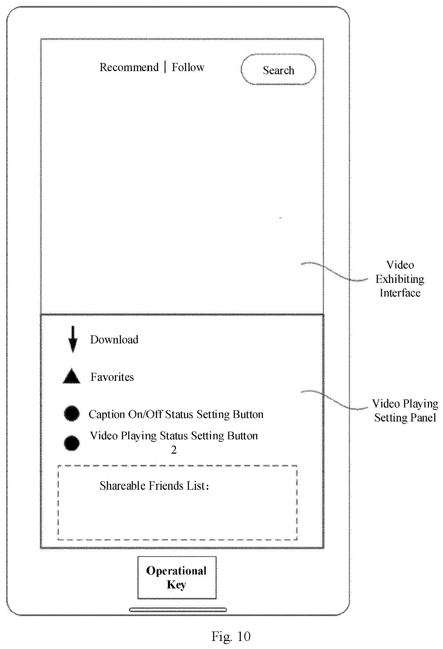

When it is determined that the current video has a corresponding caption file, a caption on/off status setting button may be exhibited in the video playing setting panel for the user to choose whether to display the caption when playing the video. As shown in Fig. 10, in the video playing setting panel, one of the video playing status setting buttons is the caption on/off status setting button.

The status of the caption on/off status setting button is determined according to the caption displaying status of the current video. If the current video playing interface is displaying the caption, the caption on/off status setting button is a caption display off button; and if the current video playing interface is not displaying the caption, the caption on/off status setting button is a caption display on button. Usually, after the video playing client is started, when a video with a corresponding video caption is being played, the caption is displayed by default, and then the playing status setting may be performed through the video playing status setting button in the video playing setting panel.

S330: Updating the caption displaying status of the current video and caption displaying status settings according to a result of the user's operation on the video caption on/off status setting button, to enable the client playing the current video to perform video playing according to the updated caption displaying status settings when switching to play a different video before ending the running process.

According to a result of the user's video playing status setting, the caption display will be accordingly turned off or on during the playing of the video. In this embodiment, the updated caption displaying status will last until the process of the video playing client ends. That is, after the current video is switched from a caption on status to a caption off status, the caption of the video will still not be displayed when the next video is being played; and after the current video is switched from the caption off status to the caption on status, the caption of the video will still be displayed when the next video is being played. Therefore, when the user watches multiple videos continuously, it is not necessary to repeat the same video playing status setting. When the user wants to change the video playing status again, the user just has to trigger the video playing setting panel again.

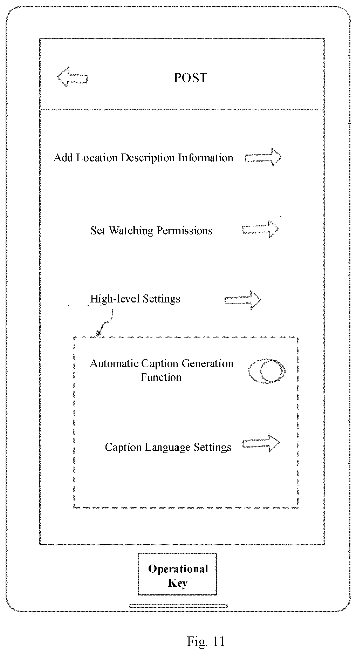

This embodiment also provides a video caption setting mode in a video posting stage, which is specifically as follows:
In a video posting page of the current video, a video caption function setting button is provided. As shown in Fig. 11, in the video posting interface, video location description information, video watching permissions and a series of contents of high-level setting items may be set. In the high-level setting items, there are settings for turning on or off an automatic caption generation function. The corresponding lower-level menu may be started through "indicator arrows" corresponding to various function setting items. The setting items of automatic caption generation function and caption language settings in the dashed box below are the contents of the lower-level menu of high-level settings. The corresponding menus may be upfolded and set according to the setting requirements. According to a result of the user's operation on the video caption function setting button, caption setting parameters of the current video may be determined, wherein the caption setting parameters include a caption language and/or caption display rendering parameters.

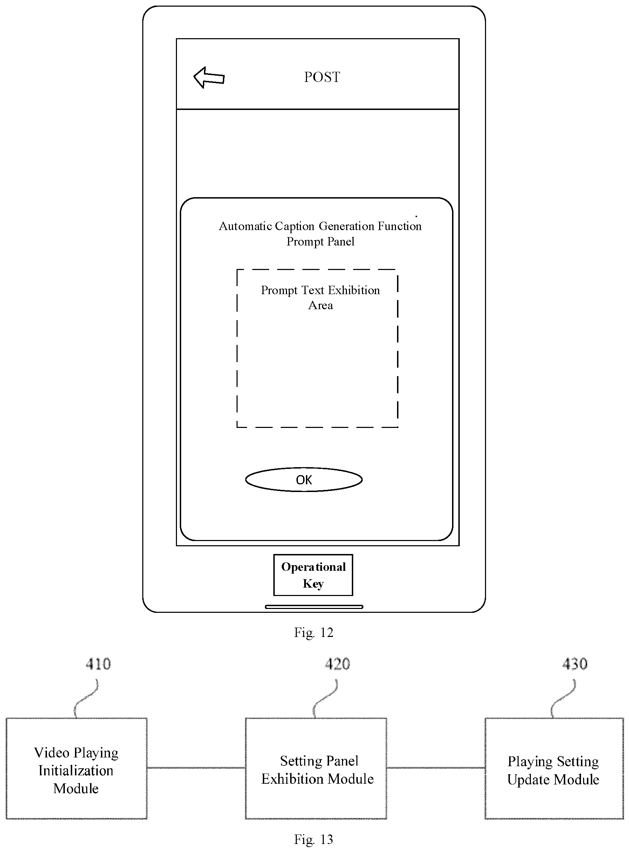

If the user enters the video posting interface for the first time after downloading or updating the application, an automatic caption generation function prompt panel will pop up (as shown in Fig. 12) to inform the user how to generate a caption for the video. After reading the text in the prompt text exhibition area, the user may click the OK key to turn off the automatic caption generation function prompt panel and turn the page to the corresponding function setting interface.

The technical schemes of the embodiments of the present disclosure set in the video playing interface a video playing setting panel which can be triggered to pop-up, and exhibit, during playing of the current video, in response to the user's triggering operation on the video playing setting panel, the video playing setting panel according to whether there is a caption file with the current video as well as the caption displaying status, and provide a caption on/off status setting button in the video playing setting panel; then update, according to a result of the user's operation on the caption on/off status setting button, the video playing status of the current video and video playing status settings, to enable the client playing the current video to perform video playing according to the updated video playing status settings when switching to play a different video before ending the running process. The technical schemes disclosed by the embodiments of the present disclosure solve a problem that the current mode for controlling on/off of the caption is inconvenient for the user and the video consumption experience is poor; and can provide a video playing status setting panel in the video playing interface to facilitate the user to set the video playing status at any time, while maintaining the user's video playing status settings effective for the duration from the start to end of the video playing application process, during which when playing a different video, it is not necessary to repeat the same setting operations, achieving a better video consumption experience.

### Embodiment 4

Fig. 13 is a structural diagram of a video playing setting apparatus provided by Embodiment 4 of the present disclosure. The video playing setting apparatus provided by this embodiment is applicable to scenarios of video playing status setting, especially to short video playing platforms. The apparatus can be implemented in the form of software and/or hardware, and can be configured in an electronic device, such as a mobile terminal or a server device.

As shown in Fig. 13, the video playing setting apparatus includes a video playing initialization module 410, a setting panel exhibition module 420 and a playing setting update module 430.

The video playing initialization module 410 is configured to determine, when a client is started, an initialized playing status according to video playing status setting information of a current user account, and perform video playing; the setting panel exhibition module 420 is configured to exhibit, during playing of a current video, a video playing setting panel in response to user's trigger operation on the video playing setting panel, and provide a preset video playing status setting button in the video playing setting panel; and the playing setting updating module 430 is configured to update a video playing status of the current video according to a result of user's operation on the preset video playing status setting button, to enable the client playing the current video to perform video playing according to the updated video playing status when switching to play a different video before ending a running process.

The technical schemes of the embodiments of the present disclosure set in the video playing interface a video playing setting panel which can be triggered to pop-up, and exhibit, during playing of the current video, the video playing setting panel in response to the user's triggering operation on the video playing setting panel, and provide a preset video playing status setting button in the video playing setting panel; then update, according to a result of the user's operation on the preset video playing status setting button, the video playing status of the current video and video playing status settings, to enable the client playing the current video to perform video playing according to the updated playing status settings when switching to play a different video before ending the running process. The technical schemes disclosed by the embodiments of the present disclosure solve a problem that the current mode for controlling on/off of the caption is inconvenient for the user and the video consumption experience is poor; and can provide a video playing status setting panel in the video playing interface to facilitate the user to set the video playing status at any time, while maintaining the user's video playing status settings effective for the duration from the start to end of the video playing application process, during which when playing a different video, it is not necessary to repeat the same setting operations, achieving a better video consumption experience.

In some implementations, the setting panel exhibition module 420 is configured to:
provide, when any playing status setting item in the initialized playing status is in on status, the preset video playing status setting button in the video playing setting panel as a corresponding playing status setting item off button; and provide, when any playing status setting item in the initialized playing status is in off status, the preset video playing status setting button in the video playing setting panel as a corresponding playing status setting item on button.

In some implementations, the preset video playing status setting button is a video caption on/off status setting button, a video content or title translation on/off status setting button, a video multiple-speed playing status setting button and/or a video sound on/off status setting button.

In some implementations, the setting panel exhibition module 420 is configured to prompt attribute information and/or a setting path of playing status exhibition content corresponding to the preset video playing status setting button in a video playing interface, when the user makes interaction for the first time with an area in which the playing status exhibition content is and the mode of the interaction is different from the trigger mode of triggering the video playing setting panel.

In some implementations, the video playing setting apparatus further includes: a prompt text exhibition module, configured to exhibit corresponding operation prompt information according to a cumulative number of times of the user's operation on the preset video playing status setting button.

In some implementations, the setting panel exhibition module 420 is further configured to:
when the preset video playing status setting button is the video caption on/off status setting button,
determine a caption displaying status of the current video according to a current playing status of the current video; provide a video caption on/off status setting button in the video playing setting panel according to the caption displaying status.

In some implementations, the video playing setting apparatus further includes: a caption addition setting module, configured to:
provide a video caption function setting button in a video posting page of the current video; determine caption setting parameters of the current video according to a result of the user's operation on the video caption function setting button, wherein the caption setting parameters include a caption language and/or caption display rendering parameters.

In some implementations, the caption addition setting module may be further configured to:
prompt a video caption addition function in a preset mode during the first video posting after updating of version of the client playing the current video; when the user triggers the video caption addition function, turn to a caption setting interface, and exhibit preset caption language options and/or caption rendering parameter options for the user to select.

The video playing setting apparatus provided by the embodiments of the present disclosure can perform the video playing setting methods provided by any embodiment of the present disclosure, and has the corresponding functional modules and effects for performing the method.

The various units and modules included in the above apparatus are only divided according to functional logics, but are not limited to the above division, as long as the corresponding functions can be realized; additionally, the names of the various functional units are only for convenience of being distinguished from each other, and are not used to limit the protection scope of the embodiments of the present disclosure.

### Embodiment 5

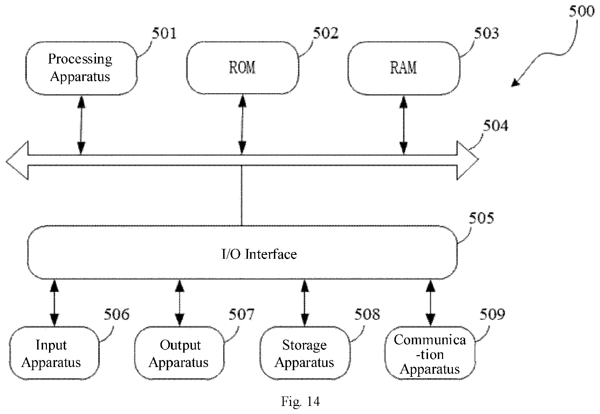

Referring to FIG. 14, FIG. 14 illustrates a schematic structural diagram of an electronic device (e.g., the terminal device or server in FIG. 14) 500 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device 500 illustrated in FIG. 14 is merely an example, and should not pose any limitation to the functions and the range of use of the embodiments of the present disclosure.

As illustrated in FIG. 14, the electronic device 500 may include a processing apparatus 501 (e.g., a central processing unit, a graphics processing unit, etc.), which can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected by means of a bus 504. An input/output (I/O) interface 505 is also connected to the bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While FIG. 14 illustrates the electronic device 500 having various apparatuses, it should be understood that not all of the illustrated apparatuses are necessarily implemented or included. More or fewer apparatuses may be implemented or included alternatively.

According to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 508, or may be installed from the ROM 502. When the computer program is executed by the processing apparatus 501, the above-mentioned functions defined in the video playing setting methods of the embodiments of the present disclosure are performed.

The electronic device provided by the embodiments of the present disclosure and the video playing setting methods provided by the above embodiments belong to the same disclosed concept, and the technical details not described exhaustively in this embodiment can be found in the above embodiments, and this embodiment has the same beneficial effects as the above embodiments.

### Embodiment 6

An embodiment of the present disclosure provides a computer storage medium having stored thereon a computer program which, when executed by a processor, implements the video playing setting methods provided by the above embodiments.

The above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. Examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM) or flash memory, an optical fiber, a portable compact disk read-only memory (CD-ROM), an optical storage device, a magnetic storage device or any suitable combinations of the above. In the present disclosure, the computer-readable storage medium may be any tangible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementations, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-described computer-readable medium may be contained in the above-described electronic device; or it may exist alone without being assembled into the electronic device.

The above-described computer-readable medium carries one or more programs that, when executed by the electronic device, cause the electronic device to:
determine, when a client is started, an initialized playing status according to video playing status setting information of a current user account, and perform video playing; exhibit, during playing of current video, a video playing setting panel in response to user's trigger operation on the video playing setting panel, and provide a preset video playing status setting button in the video playing setting panel; and update a video playing status of the current video according to a result of user's operation on the preset video playing status setting button, to enable the client playing the current video to perform video playing according to the updated video playing status when switching to play a different video before ending a running process.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. In some alternative implementations, the function indicated in the box may also occur in a different order from those indicated in the drawings. For example, two consecutively represented boxes may actually be executed basically in parallel, and sometimes they may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit and module does not constitute a limitation for the unit and module itself in some cases. For example, a data generation module may also be described as "a video data generation module".

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a tangible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM or flash memory, an optical fiber, CD-ROM, an optical storage device, a magnetic storage device, or any suitable combinations of the above.

According to one or more embodiments of the present disclosure, [example 1] provides a video playing setting method, comprising:
determining, when a client is started, an initialized playing status according to video playing status setting information of a current user account, and performing video playing;
exhibiting, during playing of a current video, a video playing setting panel in response to a user's trigger operation on the video playing setting panel, and providing a preset video playing status setting button in the video playing setting panel; and
updating a video playing status of the current video according to a result of the user's operation on the preset video playing status setting button, to enable the client playing the current video to perform video playing according to the updated video playing status when switching to play a different video before ending a running process.

According to one or more embodiments of the present disclosure, [example 2] provides a video playing setting method, further comprising:
In some implementations, the providing the preset video playing status setting button in the video playing setting panel comprises:
in case that any playing status setting item in the initialized playing status is in an on status, the preset video playing status setting button provided in the video playing setting panel being an off button of a corresponding playing status setting item; and
in case that a playing status setting item in the initialized playing status is in an off status, the preset video playing status setting button provided in the video playing setting panel being an on button of a corresponding playing status setting item.

According to one or more embodiments of the present disclosure, [example 3] provides a video playing setting method, further comprising:
In some implementations, the preset video playing status setting button is a video caption on/off status setting button, a video content or title translation on/off status setting button, a video multiple-speed playing status setting button and/or a video sound on/off status setting button.

According to one or more embodiments of the present disclosure, [example 4] provides a video playing setting method, further comprising:
In some implementations, the method further comprises:
prompting at least one of attribute information and a setting path of playing status exhibition content corresponding to the preset video playing status setting button in a video playing interface, in case that the user makes interaction for the first time with an area in which the playing status exhibition content is and a mode of the interaction is different from a trigger mode for triggering the video playing setting panel.

According to one or more embodiments of the present disclosure, [example 5] provides a video playing setting method, further comprising:
In some implementations, the method further comprises:
exhibiting, according to a cumulative number of times of the user's operations on the preset video playing status setting button, corresponding operation prompt information

According to one or more embodiments of the present disclosure, [example 6] provides a video playing setting method, further comprising:
In some implementations, in case that the preset video playing status setting button is the video caption on/off status setting button, the method further comprises:
determining a caption displaying status of the current video according to a current playing status of the current video; and
providing the video caption on/off status setting button in the video playing setting panel according to the caption displaying status.

According to one or more embodiments of the present disclosure, [example 7] provides a video playing setting method, further comprising:
In some implementations, a process of setting captions of the current video at a video posting stage comprises:
providing a video caption function setting button in a video posting page of the current video; and
determining caption setting parameters of the current video according to a result of the user's operation on the video caption function setting button, wherein the caption setting parameters include of a caption language and/or caption display rendering parameters.

According to one or more embodiments of the present disclosure, [example 8] provides a video playing setting method, further comprising:
In some implementations, the method further comprises:
prompting a video caption addition function in a preset mode during a first video posting process after updating of a version of the client playing the current video; and
turning, when the user triggers the video caption addition function, to a caption setting interface, and exhibiting preset caption language options and/or caption rendering parameter options for the user to select.

According to one or more embodiments of the present disclosure, [example 9] provides a video playing setting apparatus, comprising:
a video playing initialization module, configured to determine, when a client is started, an initialized playing status according to video playing status setting information of a current user account, and perform video playing;
a setting panel exhibition module, configured to exhibit, during playing of a current video, a video playing setting panel in response to a user's trigger operation on the video playing setting panel, and provide a preset video playing status setting button in the video playing setting panel; and
a playing setting update module, configured to update a video playing status of the current video according to a result of user's operation on the preset video playing status setting button, to enable the client playing the current video to perform video playing according to the updated video playing status when switching to play a different video before ending a running process.

According to one or more embodiments of the present disclosure, [example 10] provides a video playing setting apparatus, further comprising:
In some implementations, the setting panel exhibition module is configured to:
provide, when any playing status setting item in the initialized playing status is in on status, the preset video playing status setting button in the video playing setting panel as a corresponding playing status setting item off button; and
provide, when any playing status setting item in the initialized playing status is in off status, the preset video playing status setting button in the video playing setting panel as a corresponding playing status setting item on button.

According to one or more embodiments of the present disclosure, [example 11] provides a video playing setting apparatus, further comprising:
In some implementations, the preset video playing status setting button is a video caption on/off status setting button, a video content or title translation on/off status setting button, a video multiple-speed playing status setting button and/or a video sound on/off status setting button.

According to one or more embodiments of the present disclosure, [example 12] provides a video playing setting apparatus, further comprising:
In some implementations, the setting panel exhibition module is configured to prompt attribute information and/or a setting path of playing status exhibition content corresponding to the preset video playing status setting button in a video playing interface, when the user makes interaction for the first time with an area in which the playing status exhibition content is and the mode of the interaction is different from the trigger mode of triggering the video playing setting panel.

According to one or more embodiments of the present disclosure, [example 13] provides a video playing setting apparatus, further comprising:
In some implementations, In some implementations, the video playing setting apparatus further includes: a prompt text exhibition module, configured to exhibit corresponding operation prompt information according to a cumulative number of times of the user's operation on the preset video playing status setting button.

According to one or more embodiments of the present disclosure, [example 14] provides a video playing setting apparatus, further comprising:
In some implementations, the setting panel exhibition module is further configured to:
when the preset video playing status setting button is the video caption on/off status setting button,
determine a caption displaying status of the current video according to a current playing status of the current video; and
provide a video caption on/off status setting button in the video playing setting panel according to the caption displaying status.

According to one or more embodiments of the present disclosure, [example 15] provides a video playing setting apparatus, further comprising:
In some implementations, the video playing setting apparatus further includes: a caption addition setting module, configured to:
provide a video caption function setting button in a video posting page of the current video; and
determine caption setting parameters of the current video according to a result of the user's operation on the video caption function setting button, wherein the caption setting parameters include a caption language and/or caption display rendering parameters.

According to one or more embodiments of the present disclosure, [example 16] provides a video playing setting apparatus, further comprising:
In some implementations, the caption addition setting module may be further configured to:
prompt a video caption addition function in a preset mode during the first video posting after updating of version of the client playing the current video; and
when the user triggers the video caption addition function, turn to a caption setting interface, and exhibit preset caption language options and/or caption rendering parameter options for the user to select.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

## Claims

1. A video playing setting method, comprising:
determining, when a client is started, an initialized playing status according to video playing status setting information of a current user account, and performing video playing;
exhibiting, during playing of a current video, a video playing setting panel in response to a user's trigger operation on the video playing setting panel, and providing a preset video playing status setting button in the video playing setting panel; and
updating a video playing status of the current video according to a result of the user's operation on the preset video playing status setting button, to enable the client playing the current video to perform video playing according to the updated video playing status when switching to play a different video before ending a running process.

2. The method of claim 1, wherein the providing the preset video playing status setting button in the video playing setting panel comprises:
in case that a playing status setting item in the initialized playing status is in an on status, the preset video playing status setting button provided in the video playing setting panel being an off button of a corresponding playing status setting item; and
in case that a playing status setting item in the initialized playing status is in an off status, the preset video playing status setting button provided in the video playing setting panel being an on button of a corresponding playing status setting item.

3. The method of claim 1 or 2, wherein the preset video playing status setting button is at least one of a video caption on/off status setting button, a video content or title translation on/off status setting button, a video multiple-speed playing status setting button and a video sound on/off status setting button.

4. The method of claim 1, further comprising:
prompting at least one of attribute information and a setting path of playing status exhibition content corresponding to the preset video playing status setting button in a video playing interface, in case that the user makes interaction for the first time with an area in which the playing status exhibition content is and a mode of the interaction is different from a trigger mode for triggering the video playing setting panel.

5. The method of claim 1, further comprising:
exhibiting, according to a cumulative number of times of the user's operations on the preset video playing status setting button, corresponding operation prompt information.

6. The method of claim 3, wherein in case that the preset video playing status setting button is the video caption on/off status setting button, the providing the preset video playing status setting button in the video playing setting panel comprises:
determining a caption displaying status of the current video according to a current playing status of the current video; and
providing the video caption on/off status setting button in the video playing setting panel according to the caption displaying status.

7. The method of claim 6, wherein a process of setting captions of the current video at a video posting stage comprises:
providing a video caption function setting button in a video posting page of the current video; and
determining caption setting parameters of the current video according to a result of the user's operation on the video caption function setting button, wherein the caption setting parameters include at least one of a caption language and caption display rendering parameters.

8. The method of claim 7, further comprising:
prompting a video caption addition function in a preset mode during a first video posting process after updating of a version of the client playing the current video; and
turning, when the user triggers the video caption addition function, to a caption setting interface, and exhibiting at least one of preset caption language options and caption rendering parameter options for the user to select.

9. A video playing setting apparatus, comprising:
a video playing initialization module, configured to determine, when a client is started, an initialized playing status according to video playing status setting information of a current user account, and perform video playing;
a setting panel exhibition module, configured to exhibit, during playing of a current video, a video playing setting panel in response to a user's trigger operation on the video playing setting panel, and provide a preset video playing status setting button in the video playing setting panel; and
a playing setting update module, configured to update a video playing status of the current video according to a result of user's operation on the preset video playing status setting button, to enable the client playing the current video to perform video playing according to the updated video playing status when switching to play a different video before ending a running process.

10. An electronic device, comprising:
at least one processor;
a storage, configured to store at least one program,
wherein the at least one program, when executed by the at least one processor, causes the at least one processor to implement the video playing setting method of any of claims 1-8.

11. A storage medium containing computer-executable instructions which, when executed by a computer processor, are used for performing the video playing setting method according to any of claims 1-8.

12. A computer program product, including a computer program carried on a non-transitory computer readable medium, the computer program including program codes for performing the video playing setting method according to any of claims 1-8.
